# EUROPEAN PATENT APPLICATION

(11) **EP 3 772 711 A1**
(43) Date of publication of application: **10.02.2021**
(21) Application number: 19190013.3
(22) Date of filing: 05.08.2019
(51) Int. Cl.: G06Q 10/06

(54) **INTEGRATED MODEL FOR CONTROLLING A TECHNICAL SYSTEM**

(71) Applicant: Siemens Aktiengesellschaft, 80333 München (DE)
(72) Inventor: Joanni, Andreas, 80337 München (DE); Ratiu, Daniel, 80997 München (DE)

(57) **Abstract**

The invention relates to a method for controlling a technical system, wherein at least one milestone step and a plurality of intermediate steps are scheduled at respective points in time. Time deviations for the intermediate steps are obtained, wherein a time deviation denotes a difference from an initial planning of a step. For the milestone step, a time deviation is determined using the time deviations of the intermediate steps. A cost function is obtained for the milestone step, wherein the cost function defines a cost value for the technical system dependent on the time deviation of the milestone step using a domain-specific language (DSL), e.g. based on a contractual requirement for the technical system. A cost value is determined for the technical system using the time deviation of the milestone step and the cost function. The technical system is controlled based on the cost value.

## Description

### Technical field

Various examples of the invention generally relate to controlling a technical system. Various examples specifically relate to an integrated model for controlling a complex technical system based on timeline and system cost.

### Background

Realization of complex technical systems requires complex orchestration of customers and possibly consortium partners, as well as of various suppliers with a large number of interdependencies of technical and organizational nature. For example, the realization of a power plant involves both civil engineering activities, e.g. construction of the building, as well as ones belonging to supply and installation of equipment, e.g. delivery of turbines, generators, or management of people, e.g. teams of engineers must be on the construction site when they are needed.

According to conventional techniques for controlling a complex technical system, planning, controlling, and operation of steps in the technical system is done by allocating time buffers for each step based on previous experience and expert judgment.

Steps and their interdependencies, the required resources and the associated risks with each step are defined. Using this information, critical paths in the project execution can be identified and the risk of missing a milestone by a certain amount of days can be computed using conventional controlling tools. These tools, however, cannot consider technical system cost consequences effected by delayed steps in the technical system, which may be required by contractual agreements with cost consequences stipulated therein. This cost impact may comprise e.g. delay penalties towards a customer, or extra charges from suppliers in order to speed up certain tasks in order to mitigate the overall consequences, or a cost impact by increased quality and speed of the technical system.

### Summary

Therefore, the idea of the presented approach is to provide an advanced method and a corresponding device for controlling a technical system, which overcome or mitigate at least some of the above-identified limitations and drawbacks.

The solution according to the invention is described with respect to the claimed methods as well as with respect to the claimed devices for controlling a technical system. Features, advantages, or alternative embodiments herein may be assigned to the other claimed objects and vice versa. In other words, the claims for the devices may be improved with features described or claimed in the context of the methods, and vice versa, wherein a functional feature of a method may be embodied by an operative module, such as a processor, a memory or an interface, of the device.

According to a method for controlling a technical system, at least one milestones step and a plurality of intermediate steps are scheduled to be completed by the technical system at respective points in time, wherein completion of the at least one milestone step depends on completion of the intermediate steps.

In various examples, a plurality of steps may be required to be completed in the technical system, or for the technical system, wherein each step may be scheduled to be completed at a predetermined point in time. The plurality of steps may comprise at least one milestone step, which may be associated with a cost function, and a plurality of intermediate steps, wherein completion of the at least one milestone step may depend on previous completion of one or more of the intermediate steps. In other words, intermediate steps may have to be performed and completed first, before the at least one milestone step may be reached.

In various examples, one or more, or all, of the intermediate steps may be scheduled to be completed at a respective point in time. One or more of the intermediate steps may be dependent on each other, i.e. an intermediate step may be dependent on one or more other intermediate steps. An intermediate step may not be scheduled to be completed at a predetermined point in time but rather are scheduled referring to a beginning or an end or at least one other intermediate step.

The method for controlling a technical system comprises the following steps:
In a step, time deviations for the intermediate steps are obtained.

According to various examples, for one or more, or all, intermediate steps a respective time deviation may be obtained. A time deviation may be a time difference between the scheduled duration of a step, i.e. time difference between the beginning and the end points in time, and the actual or changed duration of the step. A time deviation can also be caused by a shift of the start of a step. When the duration of a step deviates from a scheduled duration, also the point in time, when the step is scheduled to be completed, may be shifted. When a step is delayed, this may be a positive value of a time deviation, and when a step is brought forward in time, this may be a negative value of a time deviation.

In other words, a time deviation for a scheduled step by the technical system may refer to temporal shift of the point in time, when the step is completed. In such a way, a time deviation may be a period of time, according to which completion of the step may be delayed or may be brought forward in time. In general, a time deviation may comprise a difference between a scheduled point in time and an actual point in time, for example when the step has actually been completed, or will actually be completed, in the technical system.

In another step, a time deviation for the at least one milestone step is determined using the time deviations of the intermediate steps, on which the milestone depends.

According to various examples, the milestone step may depend on previous completion of at least one of the intermediate steps. For example, when the at least one intermediate step may be delayed or brought forward in time, because of the dependence, also the actual point in time, when the milestone step can be reached, may be moved by the same amount of time. When a plurality of intermediate steps have respective time deviations, the dependent milestone step may be moved by the sum of the time deviations. As a time deviation may be a positive or a negative value, also the sum of time deviations, may be a positive or a negative value. In other words, determining a time deviation for the at least one milestone step may comprise adding or summing up the obtained time deviations of the intermediate steps, on which the milestone step depends.

In another step, a cost function for each of the at least one milestone step is obtained, wherein the cost function defines a cost value using the time deviation of the milestone step.

According to various examples, a milestone step, or possibly also an intermediate step, may be associated with a cost function. A cost function may refer to a defined relation between a time deviation of a scheduled point in time and an actual point in time of the step, and a cost value. For example, a cost function may comprise a simple table, wherein for each of a plurality of values of time deviation, a respective cost value is defined.

For example, a cost function may be defined using a domain-specific language. In various examples, a domain-specific language may be used to specify lookup tables, step functions, analytical mathematical function, in a way that is efficient, unambiguous, easily understood and communicated by domain experts, and close to the language used in contracts. A cost function may be represented by a probability distribution based on a plurality of time deviations and their probabilities. A cost value may refer to, e.g. an abstract value without unit, a value describing a quality of the technical system, a value describing the efficiency of the technical system, a value describing a cost of the technical system such as for example an energy consumption, a material consumption, quality of products, and/or a financial cost as required in an contractual agreement. For instance, to provide eco-friendly operation, the energy consumption can be minimized. For instance, the quality of products could be associated with mean-time-between failure. Such techniques are based on the finding that sometimes backlogs in the production process can result in a decreased quality, e.g., due to degradation of parts or materials or chemicals due to non-timely processing, etc.. Sometimes, material consumption may also be dependent on delays. For instance, to maintain a certain state, it may be required to use water cooling, etc.. Then the water consumption can increase in case there is a time deviation.

In other words, the cost function may generally define an association between a time deviation and a cost value related to the time deviation. A time deviation of a step by a technical system may have a technical effect on other steps by the technical system and/or the complete technical system. Such an effect may for example comprise an increased or decreased cost, such as an energy consumption, material consumption, or efficiency of the technical system, which may in general be expressed by a cost function. Accordingly, the costs can be expressed in various terms, e.g., energy consumption, mean-time-between-failure, etc., as explained above. In this regard, a N-dimensional cost function would be conceivable, where N>1, to map multiple cost types. Such a cost function may include requirements agreed upon in a contract. The cost function may be a predetermined or predefined cost function, wherein the cost function may be determined or defined by one or more contractual agreements, for example an agreement between an owner or consortium leader of the technical system and a third party, such as a supplier, subcontractor, customer, or consortium member of the technical system. The cost function could also be trained based on feedback from historical operation of the technical system, e.g., based on state monitoring.

In another step, a cost value is determined for each of the at least one milestone step using the time deviation of the at least one milestone step and the respective cost function of the at least one milestone step. In other words, based on the current or actual point in time, when the milestone step can be reached, by a predetermined cost function a cost value may be determined.

In various examples, for each of a plurality of milestone steps, a respective time deviation may be determined and, based on the respective predetermined cost function for each milestone step and the determined time deviation, a cost value may be determined for each milestone step.

In another step, technical system is controlled based on the cost value. The technical system may be controlled using a what-if analysis a method according to the present disclosure.

In various examples, controlling the technical system based on the cost value may comprise rescheduling at least one of the at least one milestone step and the intermediate steps based on the cost value. In other words, in a decision based on the cost value or using the cost value, a new point in time may be determined or decided, for the step to be completed. For example, the technical system may be controlled in such a way, that the cost value is reduced. For this purpose, the point of time of at least one of the steps may be for example moved, forward in time. In various embodiments, the cost function may be redefined based on the cost value, or a contractual agreement may be negotiated based on the cost value. In other words, the technical system may be planned, or controlled, or operated based on the determined cost value of the at least one milestone step.

Thereby, the method according to the present disclosure provides an improved method for controlling a technical system by an integrated modeling of contractual, technical, and process-related aspects and their associated risks.

Accordingly, an efficient valuation of contractual requirements, as well as trade-off analyses of contractual alternatives, with respect to technical requirements for a complex project may be enabled, and the interactions between prospective customer, consortium partners, and suppliers, may be evaluated and efficiently coordinated already in early stages of planning, specifically before a contractual agreement is signed.

Furthermore, identification of critical steps and the early implementation of mitigating/preventive measures may be enabled, such as the proper specification of bonuses/penalties in supplier contracts. During execution of the steps of the technical system, the monitoring of the progress is eased, and a cost impact, specifically a financial impact, related to project execution delays may be permanently updated. If certain delays increase the risk of penalties, appropriate countermeasures may be planned and executed taking into consideration the countermeasure cost and the overall system cost. A cost value may relate for example to an energy cost, a financial cost, a cost due to a loss or increase of quality of products in a production line, which may be specified in contractual agreements.

Efficient planning of a technical system is enabled by trade-off analysis and decision-making as to technical, process-related or contractual alternatives for the benefit of main contractors and their suppliers as well. In such a way, the techniques according to the invention may be useful for negotiations with customers or suppliers when deviations occur or for assessing technical, process-related or contractual alternatives and the definition of contingency plans.

A device for controlling a technical system is configured to perform a method according to the present disclosure.

In the technical system, at least one milestones step and a plurality of intermediate steps are scheduled to be completed by the technical system at respective points in time, wherein completion of the at least one milestone step depends on completion of the intermediate steps.

In various embodiments, such a device may comprise at least one processor, a memory, and an interface, the memory containing program code executable by said at least one processor, wherein execution of the program code causes the device to execute the following steps.

In a step, time deviations are obtained for the intermediate steps. In another step, a time deviation is determined for the at least one milestone step using the time deviations the intermediate steps. In another step, a cost function is obtained for each of the at least one milestone step, wherein the cost function defines a cost value using the time deviation of the milestone step. In another step, a cost value is determined for each of the at least one milestone step using the time deviation of the at least one milestone step and the respective cost function of the at least one milestone step. In another step, the system is controlled based on the cost value, for example at least one of the steps, i.e. one of the at least one milestone step and the intermediate steps, may be rescheduled to the new point in time based on the cost value, and/or the order of intermediate steps may be changed. In other words, the technical system may be controlled in order to reduce the system cost, which may be represented by the cost value.

The device may further be configured to perform any method or any combination of the methods according to the present disclosure.

A computer program comprises program code, which is to be executed by at least one processor, wherein executing the program code causes the at least one processor to carry out one of the methods for controlling a technical system according to the present disclosure.

A computer-readable storage medium comprises instructions which, when executed by a computer, cause the computer to carry out one of the methods for controlling a technical system.

For such a device, computer program product, and computer-readable storage medium for controlling a technical system, technical effects may be achieved, which correspond to the technical effects described for the methods for controlling a technical system according to the present disclosure.

Although specific features described in the above summary and the following detailed description are described in connection with specific examples, it is to be understood that the features may not only be used in the respective combinations, but may also be used isolated, and features from different examples may be combined with each other, and correlate to each other, unless specifically noted otherwise. Therefore, the above summary is merely intended to give a short overview over some features of some embodiments and implementations and is not to be construed as limiting. Other embodiments may comprise other features than the ones explained above.

### Brief description of the drawings

In the following, concepts in accordance with exemplary embodiments of the invention will be explained in more detail with reference to the following drawings, in which like reference numerals refer to like elements:
Figure 1 schematically illustrates a conventional technique for controlling a technical system.
Figure 2 schematically illustrates a technique for controlling a technical system, according to embodiments of the invention.
Figure 3 illustrates a flow chart of a method for controlling a technical system, according to embodiments of the invention.
Figure 4 illustrates a schematic drawing of a device for controlling a technical system, according to embodiments of the invention.

### Detailed description of embodiments

The above and other elements, features, steps, and concepts of the present disclosure will be more apparent from the following detailed description in accordance with exemplary embodiments of the invention, which will be explained with reference to the accompanying drawings.

It is to be understood that the following description of embodiments is not to be taken in a limiting sense. The scope of the invention is not intended to be limited by the embodiments described hereinafter or by the drawings, which are taken to be illustrative only. The features of the various examples may be combined with each other, unless specifically noted otherwise.

The drawings are to be regarded as being schematic representations, and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Some examples of the present disclosure generally provide for a plurality of circuits, data storages, connections, or electrical devices such as e.g. processors. All references to these entities, other electrical devices, and the functionality provided by each are not intended to be limited to encompassing only what is illustrated, but to describe the inventive concept in the light of general knowledge of a person skilled in the art. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired. It is to be appreciated that any circuit or other electrical device disclosed herein may include any number of microcontrollers, a graphics processor unit (GPU), integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, any one or more of the electrical devices may be configured to execute program code that is embodied in a non-transitory computer readable medium programmed to perform any number of the functions as disclosed.

In the following, various techniques with respect to planning, controlling, and operating a technical system, in accordance with aspects and embodiments of the invention, will be explained.

Realization of complex technical projects requires complex orchestration of customer and possibly consortium partners, as well as of various suppliers with a large number of interdependencies of technical and organizational nature. For example, the realization of a power plant involves both civil engineering activities, e.g. construction of the building, as well as ones belonging to supply and installation of equipment, e.g. delivery of turbines, generators, or management of people, e.g. teams of engineers must be on the construction site when they are needed.

Contractual agreements between an end customer and a contractor specify bonuses or penalties related to the project execution. e.g. specified milestones must be reached in time, commissioning of a certain system must be in time. The contractor himself must orchestrate a large number of suppliers, and sometimes consortium partners, each realizing a certain technical task. Technical tasks may be dependent on each other and delays in the finishing of an intermediate step can lead to big financial impact due to the consequences it has on subsequent steps. For example, a delay of one month in finishing the construction of the plant building may cause additional costs related to delivery and installation of the turbines, e.g. the turbines presumably constructed in time must be deposited somewhere, and engineers responsible with the installation of the turbine must be kept on hold or reprogrammed to be available one month later. To manage the risks related to the complexity of project execution and to keep track of the progress, the contractor may specify additional internal milestones.

Planning an execution of a project and the contracts with suppliers may require to take into consideration the sensitivity of specific steps, wherein small delays in the planned execution of intermediate steps that are on the critical path may lead to big overall costs or increased risk that the overall deadline cannot be met and, thereby, that additional penalties must be paid.

According to traditional techniques for controlling a technical system, the planning, controlling, and operation of steps of a technical system is done by allocating time buffers for each intermediate step based on previous experience and expert judgment. The time buffers intend to mitigate the uncertainties and finally the financial risks.

During project execution, a responsible project manager may deal on daily basis with a plethora of deviations from the initial planning and take on-the-fly decisions about changes in the orchestration of project execution such that any potential financial losses are avoided or minimized. It may be the case that the deviation is rather small when measured in days or when the financial impact of a delay at a certain point in time is not clear (or seemingly low) and, thereby, the deviation is neglected, or no appropriate mitigation measures taken. However, many smaller disturbances may lead to an increased overall financial risk and the consumption of margins (initially defined buffers) with respect to the project goals. Mitigation measures are taken only when the potential financial impact is growing, and this may often be too late and, therefore, considerable penalties are pending.

Delays or deviations with respect to the initial planning may increase the financial risk due to various contractual obligations, up to a point where the manageable risks margins are overrun, the project is entering a red zone and, as a consequence, major penalties must be paid. Mitigation measures taken at this point in time are, however, less effective and the project may produce losses.

State of the art project management tools (e.g. Primavera from Oracle) allow the definition of project steps, their interdependencies, required resources and the associated risks with each step causing a delay. Using this information, critical paths in the project execution can be identified and the risk of a missing a milestone by a certain amount of days can be computed. These tools, however, do not consider contractual agreements and the financial consequences stipulated therein regarding the project execution and, thereby, cannot evaluate the financial impact of missing deadlines and the financial risks associated with deviations from the planned execution. This financial impact may e.g. be delay penalties, or extra charges from suppliers in order to speed up certain tasks in order to mitigate the overall consequences.

The techniques according to the present disclosure are based on an integrated model that takes into account several aspects such as the process steps/task which must be performed, and which are assigned to different contractual parties, their mutual dependencies and interrelations, the corresponding milestones, and the contractual agreements among parties which specify financial impact following the overrun of deadlines. This financial impact may e.g. be delay penalties, or extra charges from suppliers in order to speed up certain tasks in order to mitigate the overall consequences.

More specifically, the methods according to the present disclosure may include the following steps.

In a step, domain-specific languages (DSLs) may be used to describe the contractual requirements with respect to the project plan, the associated milestones and constraints.

For example, formal methods for contract analysis is the basis and has been described in the document Governatori, Guido, and Zoran Milosevic. "A formal analysis of a business contract language." International Journal of Cooperative Information Systems 15.04 (2006): 659-685, and in the document Hvitved, Tom. Contract formalisation and modular implementation of domain-specific languages. Diss. PhD thesis, Department of Computer Science, University of Copenhagen, 2011. However, these previous approaches do not address the modeling of the complex interrelations of contractual, technical and process-related aspects and their associated risks of the described kind.

In another step, DSLs may be used to define models for the impact of delays of intermediate steps and their effects on the overall project performance and risks.

In a yet another step, an interrelation of the above two aspects may be defined using DSLs, as well as for representing financial consequences in such a way that these can be analyzed and assessed simultaneously.

For example, if a contract condition from the first step could potentially be violated, a probability may be calculated in the second step, and the probability may be combined with the financial consequences according to an interrelation as defined in the third step, in order to calculate and optimize one or more risk mitigation measures. These mitigation measures could be of technical or process-related nature, or they could be a re-negotiation of existing contracts, using a trade-off analysis for decision support.

Integrated modeling of contractual, technical and process-related aspects and their associated risks does not only add value and provide decision support during project execution, but also in early stages before the contract is signed during negotiation of contracts and project planning.

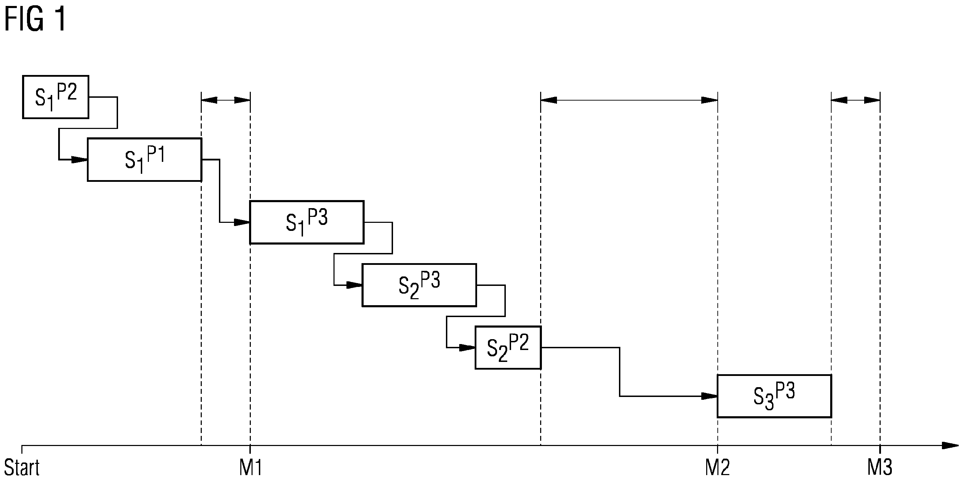

Figure 1 schematically illustrates a conventional technique for controlling a technical system.

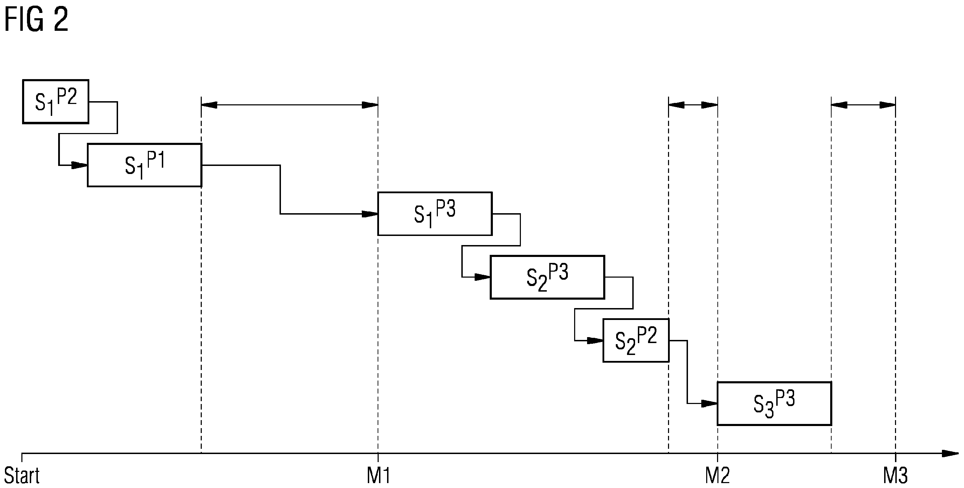

In Figures 1 and 2, risk margins, or in other words margins or time buffers, are indicated by double arrows. A risk margin may refer to a period of time, which is planned as a free time or reserve time, which can be used when preceding steps are delayed, without effecting following dependent steps and as such the overall timeline.

Referring to Figure 1, a naive project planning of a project is depicted, wherein definition of risks margins for the risk of missing deadlines, such as milestones and commissioning, is performed according to a conventional method.

Step dependencies, time deviations and time deviation probabilities of the milestone steps and intermediate steps will be explained in detail in the following:
- The complex project is executed by a consortium formed by three partners P1, P2 and P3. For the project execution, the consortium leader defined two internal milestones M1 and M2.
- Partner P1 executes the process step S₁^{P1}, in two months with risk of 30% that one week longer is needed and 10% that more than two weeks longer are needed.
- Partner P2 executes the steps S₁^{P2}, S₂^{P2}, each of them requiring one month and for each of these steps with a risk of 10% that the duration is one month longer
- Partner P3 executes the steps S₁^{P3}, S₂^{P3}, S₃^{P3} each of them requiring three months and for each of these steps with a risk of 5% that the duration is one month longer.

There are the following dependencies between the steps, as depicted in Figures 1 and 2.
- S₁^{P1} depends on the work products realized in S₁^{P2}, and S₁^{P3} cannot be begin before S₁^{P1} is completed.
- S₂^{P2} can be assembled only after the work products realized in S₂^{P3} are available, and S₂^{P3} can be started only after S₁^{P3} has been completed.
- Finally, S₃^{P3} can start only after S₂^{P2} is finished.

In the examples of Figure 1 and 2, missing specified milestones has the following financial implications:
- Each day of delay after milestone M1 causes additional costs of 1000k€.
- Each day of delay after M2 causes additional costs of 100k€.
- Each day of delay after the planned Commissioning leads to following penalties: 20 k€ per day for the first 30 days, and 100k€ per day after the first 30 days.

Referring back to Figure 1, a conventional project planning is presented based on the cost risks associated to missing a milestone, which are computed based on the risks of individual process steps in terms of duration.

Intuitively, the risk margin for M2 is the biggest since the duration between milestones M1 and M2 is longest. Thereby, a naive project planning based only upon considering the durations of steps and the risk of exceeding the deadline by a certain amount of time would foresee a bigger buffer before M2.

Figure 2 schematically illustrates an improved technique for controlling a technical system, according to embodiments of the invention.

Referring to Figure 2, a technique for controlling a technical system is provided, which takes into consideration risks associated to financial penalties (e.g. liquidated damages) which must be paid. Due to the high financial implications of missing milestone M1, the project planning which considers financial risks leave a higher risk margin, as indicated by the double arrows, in planning for milestone M1.

By an integrated model comprising time deviations and associated cost values according to the present disclosure, improved planning and controlling of a technical system is enabled, wherein definition of risk margins may be performed based on a financial risk.

Thereby, the deeply integrated approach offers an integrated modeling of contractual, technical and process-related aspects and their associated risks. Furthermore, Domain-Specific Languages (DSLs) are used to model these aspects and to perform formal analysis based on the resulting semantically rich models. Among others, modeling of the interrelated contractual aspects using DSLs provides a means for efficient, flexible and adequate (and transparent to all parties) valuation of contractual requirements and the associated monetary risk measures (including the possibility of formal contract analysis), as well as trade-off analyses of contractual alternatives with respect to construction of complex products and systems, and the interactions between prospective customer, consortium partners and suppliers, already in early stages before the contract is signed.

As examples for formal contract analysis, a sum of regular payments may be equal to the contract value, or each payment due to delay liability towards the customer may have a corresponding delay claim towards a supplier (i.e. back-to-back coverage).

Modeling of the dependencies between process steps together with the risks attached to not meeting certain intermediate deadlines and linking these to financial penalties which must be paid in case of deadline overrun or other deviations from the initial project plan, offers a transparent and better basis for the trade-off analysis and decision making in planning, controlling and operating a technical system, and allows appropriate designing of contracts with suppliers and other involved contractual parties more efficiently with less risk. In some examples, depending on the objective, the overall risk may also be distributed among parties.

Furthermore, on-the-fly mitigation measures taken during the execution may be taken in a more transparent and well-informed manner. The actual cash-flow, i.e. payments of customer due to reaching certain milestones and of penalties or liquidated damages when deviations from planning occur, may be monitored and compared with the initial planning. In such a way, the semantically rich model may serve as basis for the definition of consistency checks, which may provide to project managers early indicators about the increased risk of certain deviations from the original plan.

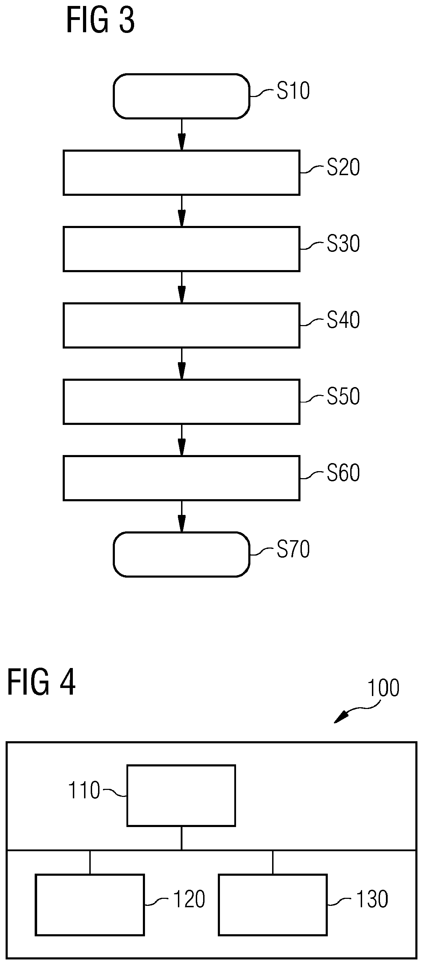

Figure 3 illustrates a flow chart of a method for controlling a technical system, according to embodiments of the invention.

By the technical system at least one milestone step in a plurality of intermediate steps are scheduled to be completed at respective points in time. Completion of the at least one milestone step depends on completion of the intermediate steps.

The method starts in step S10. In step S20, time deviations for the intermediate steps are obtained. In step S30, a time deviation for the at least one milestone step is determined using the time deviations of the intermediate steps. In step S40, a cost function is obtained for each of the at least one milestone step, wherein the cost function defines a cost value using the time deviation of the milestone step. In step S50 a cost value is determined for each of the at least one milestone step using the respective time deviation of the at least one milestone step and the respective cost function of the milestone step. In step S60, the technical system is controlled based on the cost value. The method ends in step S70.

Figure 4 illustrates a schematic drawing of a device 100 for controlling a technical system, according to embodiments of the invention.

A device 100 includes at least one processor 110, the memory 120 and an interface 130.

The memory 120 contains program code executable by said at least one processor 110, wherein execution of the program code causes the device 100 to execute the steps of a method or any combination of methods according to the present disclosure.

From the above said, some general conclusions may be drawn:
The method according to the invention may be used for more efficiently planning, or realizing, or controlling, or operating a complex technical system, or may be a method for realizing a technical system or a function of a technical system.

In the technical system, a plurality of steps, or tasks, may be performed, in order to provide a functionality or of the technical system. In other words, a plurality of steps may be scheduled to be performed and completed in or by the technical system by predetermined points in time. The steps may be scheduled in a timeline of the technical system, wherein for each step a point in time is defined, when the step has to be completed. For example, a step may be a step for realizing a function in the technical system, or a step may be a step to be performed by the technical system. For example, a step may be performed by a third party, such as a supplier, for the technical system, which may be contracted by contractual agreements by the owner of the technical system.

For example, a step dependency of a technical system may be a logical, constraint-based or preferential relationship between two steps such that the completion or the initiation of one is reliant on the completion or initiation of the other. In various examples, the plurality of steps may be interdependent of each other, e.g. two, or three, or four, or more steps may be dependent on each other.

For an intermediate step, the method may further comprise obtaining a time deviation probability for a time deviation of the intermediate step. In other words, an intermediate step may be associated with a possible time deviation and a corresponding time deviation probability that the intermediate step can only be completed with the time deviation.

An intermediate step may be associated with a plurality of possible, or probable, time deviations, wherein each of the time deviations may be associated with a corresponding time deviation probability.

In various examples, one or more, or all of the intermediate steps may have a time deviation and corresponding time deviation probability.

The method may further comprise determining a time deviation probability for the at least one milestone using the time deviations and time deviation probabilities of the intermediate steps, on which the milestone that is dependent on.

For example, an expected time deviation may be determined for each step, specifically the at least one milestone step, wherein an expected time deviation is a sum of time deviations multiplied by their probabilities.

For example, a cost function, or in other words penalty function, may be based on, or may include, a requirement by a contractual agreement, for a step, wherein, e.g. when the milestone step is not completed by the point in time, i.e. is delayed by a time deviation, a cost or penalty is required for the milestone step. A cost function may comprise e.g. a plurality of time deviations each associated with a corresponding cost value. Likewise, the cost function may be described by DSLs as described above.

The method may further comprise determining a cost value probability for the at least one milestone, using the intermediate step time deviations and time deviation probabilities, which is using the time deviation and the time deviation probability of the at least one milestone step.

For example, a cost expectation value may be determined for the milestone, which may be the cost value of the milestone multiplied by the time deviation probability of the milestone.

The method may further comprise rescheduling at least one of the at least one milestone step and the intermediate steps based on the cost value and the cost value probability of the milestone, in other words the cost expectation value of the milestone step.

In various examples, obtaining a time deviation, i.e. a time deviation value, for an intermediate step may comprise obtaining multiple time deviation values and corresponding time deviation probabilities for the intermediate step.

Any step, such as an intermediate step or a milestone step, may have multiple possible or probable time deviations, each time deviation having e.g. a time deviation probability. Such probable time deviations may be based on the finding that different technical causes in the technical system, which may or may not be independent of each other, may contribute to a delay or an acceleration of the technical step. Thus, steps in a technical system can more realistically be modeled for control of the technical system. One or more, or all, intermediate steps may have multiple possible time deviations as described.

For example, it would be possible that a time deviation of an intermediate step is based on a previous experience with the supplier responsible for the intermediate step.

In general, a milestone step may also be referred to as a Milestone, and may be a step to be reached or to be completed by the technical system. A Milestone may refer to a step as defined in conventional project planning for a technical project.

For a technical system, a plurality of milestone steps may be scheduled to be reached at predetermined points in time. In other words, the at least one milestone step may comprise a plurality of milestone steps, each dependent on at least some of the intermediate steps.

For example, a first milestone step may depend on a first subset of intermediate steps of the plurality of intermediate step, and a second milestone step may depend on a second subset of intermediate steps of the plurality of intermediate steps, wherein the first and the second subset of intermediate steps may be the same, different or partially the same. Likewise, they may not overlap or may partially overlap. It will be understood that the number of milestone steps and intermediate steps is not limited to any particular number.

It is to be appreciated that, as described for the at least one milestone dependent on the plurality of intermediate steps above, for each of the plurality of milestone steps, a time deviation probability, an expected time deviation, a cost value and a cost expectation value may be determined.

The method may further comprise determining an overall cost value of the technical system using the cost values of each milestone step.

Therein, determining an overall cost value of the technical system is performed using the cost values of each milestone step. Further, rescheduling of at least one of the milestone steps and intermediate steps may be performed based on the overall cost value of the technical system.

For example rescheduling may be done in such a way that the overall cost of the technical system is reduced, or minimized.

For example rescheduling may only be performed, if the overall cost value of the technical system exceeds a predefined threshold value for the overall cost of the technical system, for example in an interrupt control process.

Rescheduling may be performed based on an overall cost expectation value of the technical system, which may be a sum of the cost expectation values of the multiple milestone steps. Likewise, it would be possible that also for the overall expectation value a threshold is defined for an interrupt process.

Various examples of the present disclosure are based on the finding that a technical system may be controlled by taking into account timeline deviations and corresponding cost effects by using an integrated model.

For example, rescheduling at least one of the at least one milestone step and the intermediate steps may comprise rescheduling the at least one milestone step, or at least one of the plurality of milestone steps.

Rescheduling may be performed in order to reduce, or minimize a cost value, or an overall cost value, or a cost expectation value, or an overall cost expectation value of the technical system. It is to be appreciated that the technical system may be controlled based on one of the above values. In other words, instead of rescheduling at least one of the step, or a plurality of steps, the technical system may be controlled using different control parameters, the technical system may be modified on a hardware or software basis, or technical requirements may be redefined, or contractual agreements defining the technical requirements may be negotiated or renegotiated.

In various examples, controlling the technical system may comprise modeling one or more of the at least one milestone step, the dependencies of intermediate steps between each other and to the milestone step, the cost function of the at least one milestone step, the time deviations and time deviation probabilities of the intermediate steps, and the at least one milestone step, the overall system cost, and the overall expected system cost into an integrated model.

For example, it may be possible to generate an integrated model comprising the time deviation and/or time deviation probability of the at least one milestone step, and the associated cost function of the milestone step. An input of the model may be at least one time deviation of an intermediate step, wherein an output of the model may be a cost value of the technical system.

Using the model and input data, such as intermediate step time deviations and or time deviation probabilities, the overall system cost may be determined.

In various examples, the cost function of the at least one milestone step may be provided as a model.

In various examples, a new point in time may be determined and scheduled for at least one of the at least one milestone step and the intermediate steps, or a contractual agreement may be negotiated. Therein, the system cost based on contractual agreements may be reduced or minimized. In particular, the overall cost probability value of the technical system may be minimized.

At least three of the intermediate steps may be interdependent of each other. For example, a milestone may depend on at least three intermediate steps of the technical system, wherein at least two dependencies between intermediate steps exist.

Rescheduling a step, which may be and milestone step or intermediate step, may comprise determining a buffer value, which may be a time or a period of time, for the step and rescheduling the step according to the buffer value, or including the buffer value to a new point in time.

It will be understood that any time deviation, cost value, and any expectation value, of each step, may be a positive or a negative value. Accordingly, a point in time may be delayed or brought forward in time, and a system cost, i.e. a cost value or cost expectation value of the technical system, may be increased or decreased by bringing scheduling a step at another point in time.

For example, the cost function of the at least one milestone step may comprise a plurality of values of different time deviations of the milestone step, each associated with a corresponding cost value of the milestone step.

For an intermediate step having a time deviation, a mitigation measure may be defined, which is an action or measure to be performed, in order the change the time deviation. For example, a delay might be reduced, or the start or end of the intermediate step may be brought forward in time.

In general, for a mitigation measure, a measure cost may be defined. In other words, the mitigation measure may be associated with a corresponding measure cost, wherein the cost value of the milestone step may be determined further including the measure cost.

In other words, an intermediate step may have a time deviation corresponding to a mitigation measure. When determining the cost value of a milestone step, based on time deviations of a plurality of intermediate steps, the cost of the mitigation measure may be added to the cost value defined by the cost function.

In various examples, a cost value of a milestone step, or the overall cost value of the technical system defined by various milestone steps, may be a financial cost according to at least one contractual agreement for the technical system. For example, the at least one contractual agreement for the technical system may comprise a plurality of contractual agreements with a plurality of parties, i.e. entities, for the technical system.

The one or more contractual agreements for the technical system may be modeled or defined in a domain-specific language (DSL). In other words, a domain-specific language may be used to define a model including a plurality of requirements of one or more contractual agreements. A domain-specific language may be used to define and generate a model for a technical system, which describes the impact of a time deviation of an intermediate step on the at least one milestone step. Accordingly, the domain-specific language may be used to define an integrated model including the plurality of requirements according to a contractual agreement and the time deviations of the steps, for which the requirements are made.

Using a domain-specific language it may be possible to model requirements from a plurality of contracts, for example between a plurality of different contractors in the integrated model of the technical system.

Summarizing, a method for controlling a technical system is provided, wherein at least one milestone step and a plurality of intermediate steps are scheduled at respective points in time. Time deviations for the intermediate steps are obtained, wherein a time deviation denotes a difference from an initial planning of a step. For the milestone step, a time deviation is determined using the time deviations of the intermediate steps. A cost function is obtained for the milestone step, wherein the cost function defines a cost value for the technical system dependent on the time deviation of the milestone step, e.g. based on a contractual requirement for the technical system. A cost value is determined for the technical system using the time deviation of the milestone step and the cost function. The operation of the technical system is controlled based on the cost value. Thereby, an integrated modeling approach for optimizing complex projects execution in technical systems based on Domain-Specific Languages is provided. Step dependencies, effects of timeline deviations and contractual agreements are incorporated and linked with each other in an integrated model for calculating an overall system cost. A technical system may be efficiently planned, controlled, and operated based on an integrated model defining weighted effects of timeline deviations on the overall system cost.

Modeling of the step dependencies together with risks of time deviations, i.e. not meeting a certain timeline, and linking these to financial penalties which must be paid in case of deadline overrun or other deviations from the initial project plan, offers a transparent and better basis for the trade-off analysis and decision making and allows appropriate designing of contracts with suppliers and other involved contractual parties more efficiently with less risk.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims.

## Claims

1. A computer-implemented method for controlling a technical system, wherein at least one milestones step (M1, M2, M3) and a plurality of intermediate steps (S₁^{P1}, S₁^{P2}, S₁^{P3}, S₂^{P2}, S₂^{P3}, S₃^{P3}) are scheduled to be completed by the technical system at respective points in time, wherein completion of the at least one milestone step (M1, M2, M3) depends on completion of intermediate steps of the plurality of intermediate steps (S₁^{P1}, S₁^{P2}, S₁^{P3}, S₂^{P2}, S₂^{P3}, S₃^{P3}), the method comprising:
- obtaining time deviations for the intermediate steps (S₁^{P1}, S₁^{P2}, S₁^{P3}, S₂^{P2}, S₂^{P3}, S₃^{P3});
- determining a time deviation for the at least one milestone step (M1, M2, M3) using the time deviations of the intermediate steps (S₁^{P1}, S₁^{P2}, S₁^{P3}, S₂^{P2}, S₂^{P3}, S₃^{P3});
- obtaining a cost function for each one of the at least one milestone step (M1, M2, M3), wherein the cost function defines a cost value using the time deviation of the respective one of the at least one milestone step (M1, M2, M3);
- determining the cost value for each one of the at least one milestone step (M1, M2, M3) using the time deviation of the respective one of at least one milestone step (M1, M2, M3) and the respective cost function; and
- controlling the technical system based on the cost value.

2. The method according to claim 1, further comprising:
- obtaining a time deviation probability for a time deviation of an intermediate step (S₁^{P1}, S₁^{P2}, S₁^{P3}, S₂^{P2}, S₂^{P3}, S₃^{P3});
- determining a cost value probability for each of the at least one milestone step (M1, M2, M3) using the time deviation probability of the intermediate step (S₁^{P1}, S₁^{P2}, S₁^{P3}, S₂^{P2}, S₂^{P3}, S₃^{P3}); and
- controlling the technical system based on the cost value and the cost value probability.

3. The method according to claim 1 or 2, wherein multiple time deviation values and corresponding time deviation probabilities are obtained for at least one intermediate step (S₁^{P1}, S₁^{P2}, S₁^{P3}, S₂^{P2}, S₂^{P3}, S₃^{P3}).

4. The method according to one of the preceding claims, wherein the at least one milestone step (M1, M2, M3) comprises a plurality of milestone steps (M1, M2, M3), each dependent on at least one of the intermediate steps (S₁^{P1}, S₁^{P2}, S₁^{P3}, S₂^{P2}, S₂^{P3}, S₃^{P3}), the method further comprising:
- determining an overall cost value of the technical system using the cost values of each one of the plurality of milestone steps (M1, M2, M3); and
- controlling the technical system based on the overall cost value of the technical system.

5. The method according to claim 4, wherein controlling the technical system based on the cost value comprises:
- modelling the cost functions, time deviations and time deviation probabilities of each of the plurality of milestone steps (M1, M2, M3) in an integrated model of the technical system;
- determining an earlier point in time for at least one of the plurality of milestone steps (M1, M2, M3) and the intermediate steps (S₁^{P1}, S₁^{P2}, S₁^{P3}, S₂^{P2}, S₂^{P3}, S₃^{P3}), wherein an objective function including the overall cost value of the technical system is minimized or maximized; and
- rescheduling the at least one of the plurality of milestone steps (M1, M2, M3) and the intermediate steps (S₁^{P1}, S₁^{P2}, S₁^{P3}, S₂^{P2}, S₂^{P3}, S₃^{P3}) according to the earlier point in time.

6. The method according to one of the preceding claims, wherein at least three of the intermediate steps (S₁^{P1}, S₁^{P2}, S₁^{P3}, S₂^{P2}, S₂^{P3}, S₃^{P3}) are interdependent of each other.

7. The method according to one of the preceding claims, wherein the time deviations and cost values are positive or negative values.

8. The method according to one of the preceding claims, wherein the cost function of the at least one milestone step (M1, M2, M3) comprises a plurality of time deviations associated with corresponding cost values.

9. The method according to one of the preceding claims, wherein the cost value comprises at least one of an energy consumption, material consumption, quality of products in a production line, or a financial cost according to a contractual agreement for the technical system.

10. The method according to one of the preceding claims, wherein a domain-specific language (DSL) is used to model requirements of a plurality of different contractual agreements, on which the cost function of the milestone step (M1, M2, M3) is based.

11. The method according to one of the preceding claims, wherein a domain-specific language (DSL) is used to define a model for the impact of time deviations of the intermediate steps (S₁^{P1}, S₁^{P2}, S₁^{P3}, S₂^{P2}, S₂^{P3}, S₃^{P3}) on the at least one milestone step (M1, M2, M3).

12. A device (100) comprising at least one processor (110), a memory (120), and an interface (130), for controlling a technical system, wherein at least one milestones step (M1, M2, M3) and a plurality of intermediate steps (S₁^{P1}, S₁^{P2}, S₁^{P3}, S₂^{P2}, S₂^{P3}, S₃^{P3}) are scheduled to be completed by the technical system at respective points in time, wherein completion of the at least one milestone step (M1, M2, M3) depends on completion of intermediate steps of the plurality of the intermediate steps (S₁^{P1}, S₁^{P2}, S₁^{P3}, S₂^{P2}, S₂^{P3}, S₃^{P3}), the device being configured to perform the following steps:
- obtaining time deviations for the intermediate steps (S₁^{P1}, S₁^{P2}, S₁^{P3}, S₂^{P2}, S₂^{P3}, S₃^{P3});
- determining a time deviation for the at least one milestone step (M1, M2, M3) using the time deviations of the intermediate steps (S₁^{P1}, S₁^{P2}, S₁^{P3}, S₂^{P2}, S₂^{P3}, S₃^{P3});
- obtaining a cost function for each one of the at least one milestone step (M1, M2, M3), wherein the cost function defines a cost value using the time deviation of the respective one of the at least one milestone step (M1, M2, M3);
- determining the cost value for each one of the at least one milestone step (M1, M2, M3) using the time deviation of the respective one of at least one milestone step (M1, M2, M3) and the respective cost function; and
- controlling the technical system based on the cost value.

13. The device (100) according to claim 12, further configured to perform the method according to one of claims 2 to 11.

14. A computer program comprising program code to be executed by at least one processor, wherein executing the program code causes the at least one processor to carry out the method according to one of claims 1 to 11.

15. A computer-readable storage medium comprising instructions which, when executed by a computer, cause the computer to carry out the method according to one of claims 1 to 11.
